(19) Europäisches Patentamt
European Patent Office
Office européen des brevets

(11) **EP 4 319 376 A1**

(12) **EUROPEAN PATENT APPLICATION**
published in accordance with Art. 153(4) EPC

(43) Date of publication:
**07.02.2024 Bulletin 2024/06**

(21) Application number: **21934809.1**

(22) Date of filing: **29.03.2021**

(51) International Patent Classification (IPC):
***H04W 72/04*** ***(2023.01)***

(52) Cooperative Patent Classification (CPC):
**H04W 72/04**

(86) International application number:
**PCT/JP2021/013425**

(87) International publication number:
**WO 2022/208636 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.
Tokyo 100-6150 (JP)**

(72) Inventors:
• **SHIBAIKE, Naoya
Tokyo 100-6150 (JP)**

• **HARADA, Hiroki
Tokyo 100-6150 (JP)**
• **NAGATA, Satoshi
Tokyo 100-6150 (JP)**
• **PI, Qiping
Beijing, 100190 (CN)**
• **WANG, Jing
Beijing, 100190 (CN)**
• **CHEN, Lan
Beijing, 100190 (CN)**

(74) Representative: **Hoffmann Eitle
Patent- und Rechtsanwälte PartmbB
Arabellastraße 30
81925 München (DE)**

(54) **TERMINAL AND COMMUNICATION METHOD**

(57)    A terminal has: a receiving unit configured to receive DCI (Downlink Control Information) that schedules a plurality of PUSCHs (Physical Uplink Shared CHannels), and a parameter related to frequency hopping, from a base station; and a transmitting unit configured to apply, based on the parameter, frequency hopping to the plurality of PUSCHs, and transmit the plurality of PUSCHs to the base station.

FIG.3

**Description**

[FIELD OF THE INVENTION]

The present invention relates to a terminal and a communication method in a wireless communication system.

[BACKGROUND OF THE INVENTION]

In "New Radio" (NR) (also known as "5G"), which is a successor system of long-term evolution (LTE), various techniques are under study to satisfy the requirements such as large system capacity, high data transmission speed, low delay, simultaneous connection of many terminals, low cost, power saving, and so forth (see, for example, Non-Patent Document 1).

In NR release 17, the use of higher frequency bands than in previous releases is discussed (see, for example, Non-Patent Document 2). For example, applicable numerologies including subcarrier spacing and channel bandwidth, the design of the physical layer, possible obstacles in actual wireless communication, and so forth in frequency bands from 52.6 GHz to 71 GHz are discussed.

[Related-Art Documents]

[Non-Patent Documents]

[Non-Patent Document 1] 3GPP TS 38.300 V16.4.0 (2020-12)
[Non-Patent Document 2] 3GPP TS 38.306 V16.3.0 (2020-12)

[SUMMARY OF THE INVENTION]

[TECHNICAL PROBLEM]

In order to reduce the load required for physical downlink control channel (PDCCH) monitoring in a newly operated frequency band that uses a higher frequency than heretofore, discussions are underway to make the periodicity of monitoring longer. On the other hand, discussions are also underway to support scheduling of multiple physical downlink shared channels (PDSCHs) or multiple physical uplink shared channels (PUSCHs), by using single downlink control information (DCI), in order to ensure the flexibility of scheduling even in cases in which the periodicity of PDCCH monitoring is made long.

However, the method of frequency hopping, which is employed when multiple PUSCHs are scheduled, is not specified yet.

The present invention has been made in view of the foregoing, and aims to employ frequency hopping when multiple channels are scheduled in a wireless communication system.

[SOLUTION TO PROBLEM]

According to the technique disclosed herein, a terminal is provided. This terminal has: a receiving unit configured to receive DCI (Downlink Control Information) that schedules a plurality of PUSCHs (Physical Uplink Shared CHannels), and a parameter related to frequency hopping, from a base station; and a transmitting unit configured to apply, based on the parameter, frequency hopping to the plurality of PUSCHs, and transmit the plurality of PUSCHs to the base station.

[ADVANTAGEOUS EFFECTS OF INVENTION]

According to the technique disclosed herein, frequency hopping can be employed when multiple channels are scheduled in a wireless communication system.

[BRIEF DESCRIPTION OF THE DRAWINGS]

[FIG. 1] FIG. 1 is a diagram that illustrates an example structure of a wireless communication system according to an embodiment of the present invention;

[FIG. 2] FIG. 2 is a diagram that illustrates examples of frequency ranges according to an embodiment of the present invention;

[FIG. 3] FIG. 3 is a flowchart that illustrates an example of transmission according to an embodiment of the present invention;

[FIG. 4] FIG. 4 is a diagram that illustrates an example (1) of frequency hopping according to an embodiment of the present invention;

[FIG. 5] FIG. 5 is a diagram that illustrates an example (2) of frequency hopping according to an embodiment of the present invention;

[FIG. 6] FIG. 6 is a diagram that illustrates an example (3) of frequency hopping according to an embodiment of the present invention;

[FIG. 7] FIG. 7 is a diagram that illustrates an example (4) of frequency hopping according to an embodiment of the present invention;

[FIG. 8] FIG. 8 is a diagram that illustrates an example of a functional structure of a base station 10 according to an embodiment of the present invention;

[FIG. 9] FIG. 9 is a diagram that illustrates an example of a functional structure of a terminal 20 according to an embodiment of the present invention; and

[FIG. 10] FIG. 10 is a diagram that illustrates an example hardware structure of the base station 10 or the terminal 20 according to an embodiment of the present invention.

[DETAILED DESCRIPTION OF THE PREFERRED EMBODIMENTS]

Hereinafter, an embodiment of the present invention will be described with reference to the accompanying drawings. Note that the embodiment described below is an example, and the embodiments to which the present invention can be applied are by no means limited to the following embodiment.

In operating the wireless communication system according to an embodiment of the present invention, existing techniques may be used as appropriate. These existing techniques include, for example, existing LTE, but this is by no means limiting. Also, the term "LTE" as used herein shall also have a broad meaning including LTE-Advanced, as well as successor systems of LTE-Advanced (for example, NR), unless specified otherwise.

Also, in the embodiment of the present invention described below, terms that are used in existing LTE, such as "synchronization signal" (SS), "primary SS" (PSS), "secondary SS" (SSS), "physical broadcast channel" (PBCH), "physical random access channel" (PRACH), "physical downlink control channel" (PDCCH), "physical downlink shared channel" (PDSCH), "physical uplink control channel" (PUCCH), and "physical uplink shared channel" (PUSCH) are used. This is only for ease of description, and signals, functions, and so forth that are similar to these may be referred to by other names as well. Also, the above terms correspond to NR-SS, NR-PSS, NR-SSS, NR-PBCH, NR-PRACH, and the like in NR. However, signals used in NR are not always written with the prefix "NR-."

Also, in the embodiment of the present invention, the duplex scheme may be time division duplex (TDD), frequency division duplex (FDD), or another scheme (including, for example, flexible duplex).

Also, in the embodiment of the present invention, when a wireless parameter or the like is "configured," this may mean that a predetermined value is configured in advance (that is, "pre-configured"), or that the wireless parameter is signaled and configured from a base station 10 or a terminal 20.

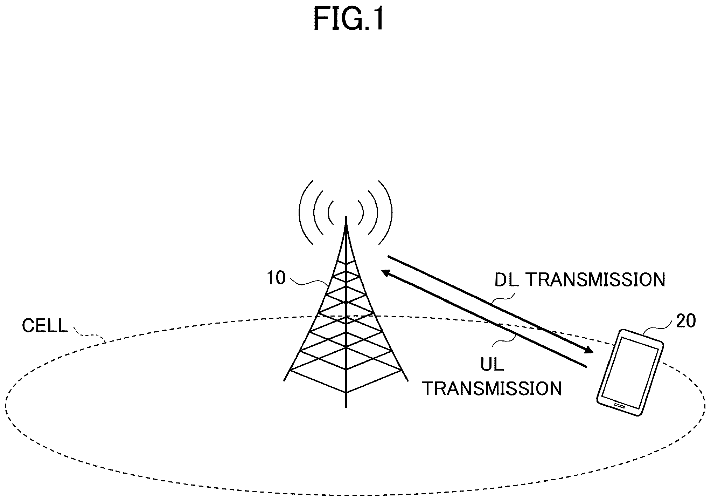

FIG. 1 is a diagram that illustrates a wireless communication system according to an embodiment of the present invention. The wireless communication system according to an embodiment of the present invention includes a base station 10 and a terminal 20, as illustrated in FIG. 1. In FIG. 1, one base station 10 and one terminal 20 are illustrated, but this is an example, and there may be more than one of each.

The base station 10 is a communication device that provides one or more cells and performs wireless communication with the terminal 20. The physical resources of radio signals are specified in the time domain and the frequency domain. The time domain resources may be defined or referred to as "orthogonal frequency division multiplexing (OFDM) symbols," and the frequency domain resources may be defined or referred to as "sub-carriers" or "resource blocks." The base station 10 transmits synchronization signals and system information to the terminal 20. The synchronization signals are, for example, NR-PSS and NR-SSS. The system information is, for example, transmitted by NR-PBCH, and is also referred to as "broadcast information." The synchronization signals and system information may be referred to as "SS/PBCH block" (SSB). As shown in FIG. 1, the base station 10 transmits control signals or data to the terminal 20 in the downlink (DL), and receives control signals or data from the terminal 20 in the uplink (UL). The base station 10 and the terminal 20 are both capable of performing beamforming and transmitting and receiving signals. Also, the base station 10 and the terminal 20 both can apply multiple-input multiple-output (MIMO)-based communication to DL or UL. Also, the base station 10 and the terminal 20 both may communicate via a secondary cell (SCell) and a primary cell (PCell) based on carrier aggregation (CA). Furthermore, the terminal 20 may communicate via a primary cell of the base station 10 and a primary secondary cell group cell (PSCell: Primary SCG Cell) of another base station 10 based on dual connectivity (DC).

The terminal 20 is a communication device with a wireless communication function, such as a smartphone, a cellular phone, a tablet, a wearable terminal, and a machine-to-machine (M2M) communication module. As illustrated in FIG. 1, the terminal 20 utilizes various communication services provided by a wireless communication system by receiving control signals or data from the base station 10 in DL, and transmitting control signals or data to the base station 10 in UL. Also, the terminal 20 receives various reference signals transmitted from the base station 10, and measures channel quality based on the reception result of the reference signals.

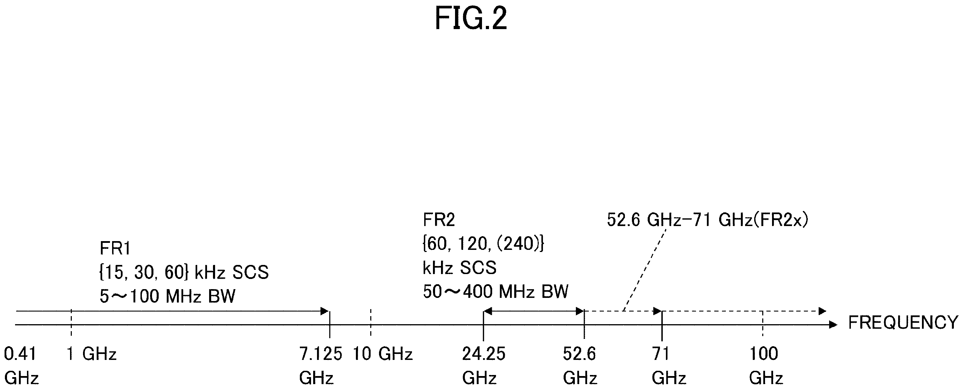

FIG. 2 is a diagram that illustrates examples of frequency ranges according to an embodiment of the present invention. In 3GPP release 15 and release 16 NR technical specifications, for example, operations using the frequency band of 52.6 GHz and higher bands are discussed. Note that, as shown in FIG. 2, a frequency range (FR) 1, which is currently specified for operation, is the frequency band from 410 MHz to 7.125 GHz, where the sub-carrier spacing (SCS) is 15, 30, or 60 kHz, and the bandwidth is from 5 MHz to 100 MHz. An FR 2 is the frequency band from 24.25 GHz to 52.6 GHz, where the SCS is 60, 120, or 240 kHz, and the bandwidth is 50 MHz to 400 MHz. For example, a newly operated frequency band may be assumed to range from 52.6 GHz to 71 GHz. Furthermore, it is also possible to assume that frequency bands above 71 GHz are supported.

In order to reduce the load required for physical downlink control channel (PDCCH) monitoring in a newly operated frequency band that uses a higher frequency than heretofore, discussions are underway to increase the periodicity of monitoring. Meantime, in order to ensure the flexibility of scheduling even when the periodicity of PDCCH monitoring is made long, there is a plan to support scheduling of multiple physical downlink shared channels (PDSCHs) or multiple physical uplink shared channels (PUSCHs) by single downlink control information (DCI) .

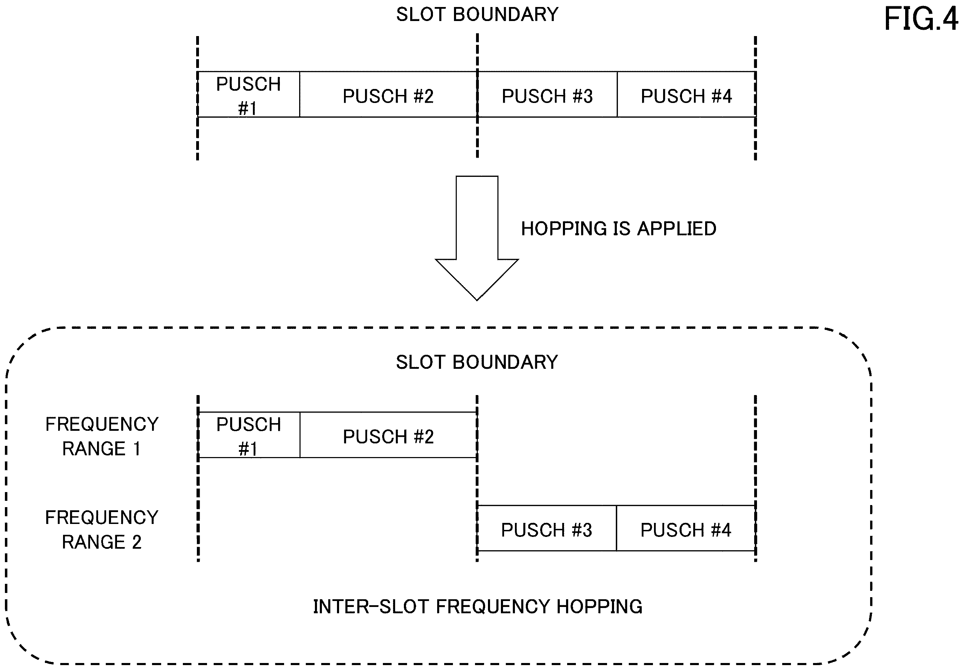

A PUSCH repetition type A and a PUSCH repetition type B are supported as types of PUSCH repetition. As shown in FIG. 4, in the event PUSCH repetition type A is employed, the mapping type, the start and length indicator (SLIV), and K may be specified. In the event PUSCH repetition type B is employed, S, L, and K may be specified. Note that SLIV indicates the starting symbol and the length, and K indicates the number of repetitions. Note that PUSCH repetition type A can be configured when PUSCH mapping type A or PUSCH mapping type B is used. PUSCH repetition type B can be configured only when PUSCH mapping type B is used.

Here, when a single PUSCH is scheduled by a DCI format 0_1 or a DCI format 0_2, frequency hopping is supported in a resource allocation type 1.

In the event PUSCH repetition type A is employed, inter-slot frequency hopping and intra-slot frequency hopping may be supported. In the event PUSCH repetition type B is employed, inter-repetition frequency hopping and inter-slot frequency hopping may be supported.

The mode of frequency hopping may be configured by RRC. In PUSCH repetition type A, frequency hopping may be configured by a higher layer parameter "frequencyHoppingDCI-0-2," for PUSCH transmission that is scheduled by DCI format 0_2. As for PUSCH transmission scheduled by DCI formats other than DCI format 0_2, frequency hopping may be configured by a higher layer parameter "frequencyHopping."

In PUSCH repetition type B, frequency hopping may be configured by the higher layer parameter "frequency-HoppingDCI-0-2," for PUSCH transmission that is scheduled by DCI format 0_2. As for PUSCH transmission scheduled by DCI format 0_1, frequency hopping may be configured by a higher layer parameter "frequencyHoppingDCI-0-1."

When PUSCH is scheduled by DCI, whether frequency hopping is enabled or disabled is determined based on the frequency hopping field in that DCI.

According to release 16, intra-slot hopping may divide a PUSCH into two halves, the first hop and the second hop. If the number of PUSCH symbols is odd, the second hop may have one more symbol. Inter-slot hopping may configure the first hop and the second hop alternately, on a per slot basis. Inter-repetition hopping may configure the first hop and the second hop alternately, per repeated transmission.

Here, since frequency hopping is not supported in resource allocation type 2 of release 16 NR-U, frequency hopping is not applicable when multi-PUSCH transmission is scheduled. On the other hand, provided that resource allocation type 2 is not applied to PUSCH transmission in release 17 NR 52.6 - 71 GHz, whether or not to apply frequency hopping to multi-PUSCH scheduling and how to apply frequency hopping need to be studied. Therefore, the following options may be applied to frequency hopping in multi-PUSCH transmission.

Option 1) PUSCH frequency hopping need not be supported in multi-PUSCH scheduling.

Option 2) PUSCH frequency hopping may be supported in multi-PUSCH scheduling. Whether or not to employ frequency hopping may be determined based on the frequency hopping flag field in scheduling DCI, or may be determined based on a new RRC parameter such as "EnablingFrequencyHoppingMulti-Pusch."

Option 2-1) In multi-PUSCH scheduling, no additional frequency hopping parameter needs to be configured. That is, existing frequency hopping parameters such as "FrequencyHopping," "frequencyHoppingDCI-0-1," "frequency-HoppingDCI-0-2" and so forth may be used to command the use of frequency hopping in multi-PUSCH scheduling and single-PUSCH scheduling.

Option 2-1-1) Existing frequency hopping methods such as inter-slot frequency hopping and intra-slot frequency hopping may be applied to multi-PUSCH scheduling by a single DCI. Note that frequency hopping need not be considered for repeated transmission.

In the event a DCI format that schedules multiple PUSCHs schedules repeated transmission of a single PUSCH and, furthermore, PUSCH repetition type A is configured for this DCI format-based PUSCH, either inter-slot frequency hopping or intra-slot frequency hopping may be configured based on the frequency hopping parameter. In the event inter-slot frequency hopping is configured, inter-slot frequency hopping may be configured if multiple PUSCHs are scheduled in multiple slots, or frequency hopping need not be configured if a PUSCH is scheduled in a single slot. In the event intra-slot frequency hopping is configured, intra-slot frequency hopping may be applied to one or multiple PUSCHs in one slot, and, in the event multiple PUSCHs are scheduled in one slot, each hop may include one or more PUSCHs.

In the event a DCI format that schedules multiple PUSCHs schedules repeated transmission of a single PUSCH and, furthermore, PUSCH repetition type B is configured for this DCI format-based PUSCH, either inter-repetition frequency hopping or inter-slot frequency hopping may be configured by the frequency hopping parameter. In the event inter-slot frequency hopping is configured, inter-slot frequency hopping is configured if multiple PUSCHs are scheduled in multiple slots, and the allocation of RBs in each hop may be the same as in conventional inter-slot frequency hopping. Frequency hopping need not need be applied when a PUSCH is scheduled in a single slot. In the event inter-repetition frequency hopping is configured, frequency hopping need not be applied to multi-PUSCH scheduling.

In the event a DCI format that schedules multiple PUSCHs does not schedule repeated transmission of a single PUSCH, either inter-slot frequency hopping or intra-slot frequency hopping may be configured by this DCI format that schedules multiple PUSCHs.

Note that option 2-1-1) above has no impact on the technical specifications of the RRC configuration.

Option 2-1-2) Enhanced frequency hopping methods such as, for example, inter-PUSCH frequency hopping and/or intra-PUSCH frequency hopping may be applied to multi-PUSCH scheduling. Details will be described later. None, either, or both of inter-slot frequency hopping and intra-slot frequency hopping may be supported in multi-PUSCH scheduling.

In the event a DCI format that schedules multiple PUSCHs schedules repeated transmission of a single PUSCH, many candidate values may be configurable by the frequency hopping parameter. In the event multi-PUSCH scheduling supports no frequency hopping mode, frequency hopping need not be applied to multi-PUSCH scheduling. In the event single-PUSCH scheduling supports no frequency hopping mode, frequency hopping need not be applied to single-PUSCH scheduling.

In the event PUSCH repetition type A is configured for a PUSCH that is scheduled by a DCI format, inter-PUSCH frequency hopping, intra-PUSCH frequency hopping, inter-slot frequency hopping, and/or intra-slot frequency hopping may be configurable as candidate values for the frequency hopping parameter configuration. When inter-PUSCH frequency hopping is configured and there is only a single PUSCH, frequency hopping need not be applied.

In the event PUSCH repetition type B is configured for a PUSCH that is scheduled by a DCI format, inter-PUSCH frequency hopping, intra-PUSCH frequency hopping, inter-slot frequency hopping, and/or inter-repetition frequency hopping may be configurable as candidate values for the frequency hopping parameter configuration. When inter-PUSCH frequency hopping is configured and there is only a single PUSCH, frequency hopping need not be applied. When inter-repetition frequency hopping is configured and multiple PUSCHs are scheduled with no repetition configured therewith, frequency hopping need not be applied.

In the event a DCI format that schedules multiple PUSCHs does not schedule repeated transmission of a single PUSCH, candidate values of the frequency hopping parameter configuration indicating inter-PUSCH frequency hopping, intra-PUSCH frequency hopping, inter-slot frequency hopping, and/or intra-slot frequency hopping may be configured by this DCI format that schedules multiple PUSCHs.

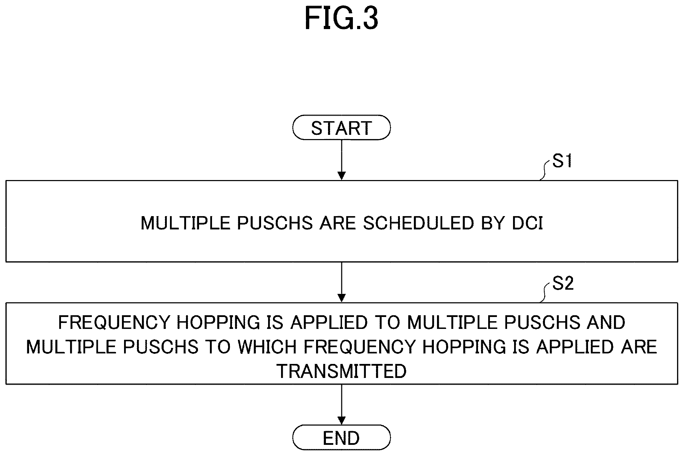

FIG. 3 is a flowchart for explaining an example of transmission according to an embodiment of the present invention. In step S1, multiple PUSCHs are scheduled for the terminal 20, from the base station 10, by a DCI. In subsequent step S2, the terminal 20 applies frequency hopping to the multiple PUSCHs and transmits these PUSCHs to the base station 10.

FIG. 4 is a diagram that illustrates an example (1) of frequency hopping according to an embodiment of the present invention. FIG. 4 shows an example of inter-slot frequency hopping. As shown in FIG. 4, hops are configured alternately, in units of slots, between frequency ranges.

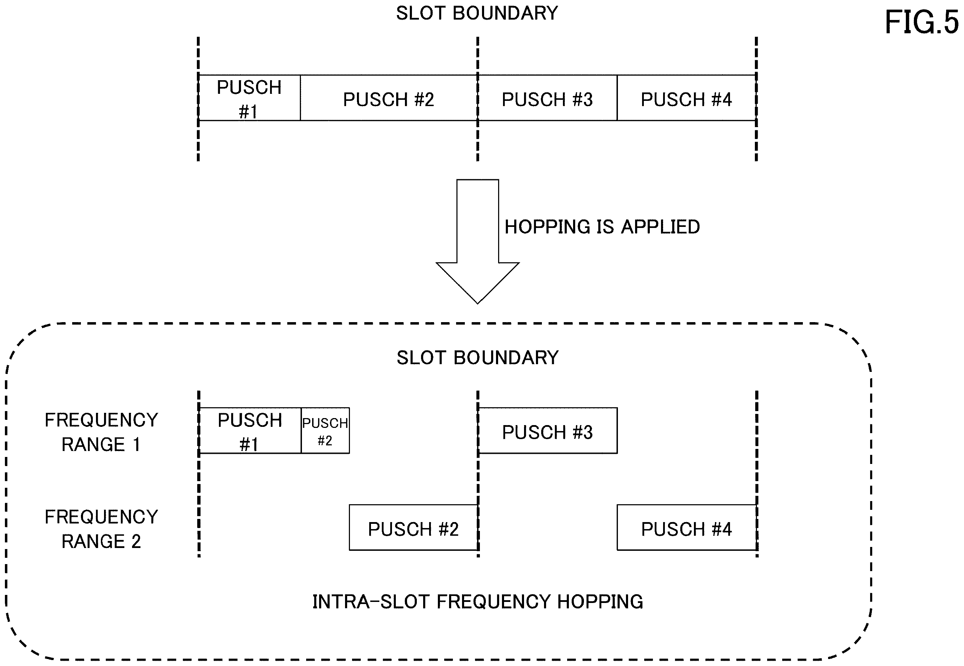

FIG. 5 is a diagram that illustrates an example (2) of frequency hopping according to an embodiment of the present invention. FIG. 5 shows an example of intra-slot frequency hopping. As shown in FIG. 5, hops are configured alternately, in units of half-slots, between frequency ranges.

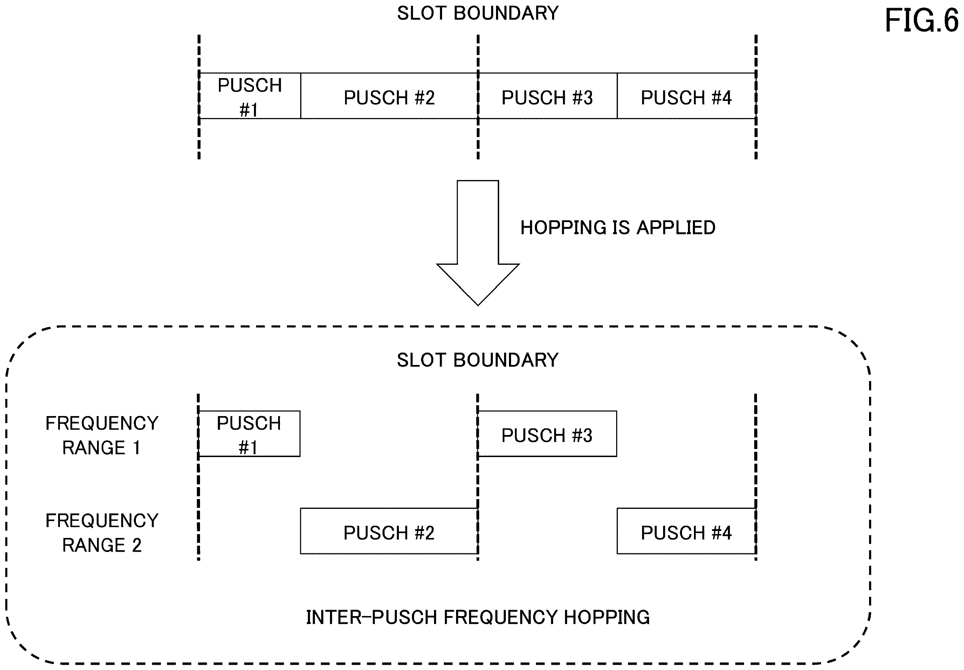

FIG. 6 is a diagram that illustrates an example (3) of frequency hopping according to an embodiment of the present invention. FIG. 6 shows an example of inter-PUSCH frequency hopping. As shown in FIG. 6, hops are configured alternately, in units of PUSCHs, between frequency ranges.

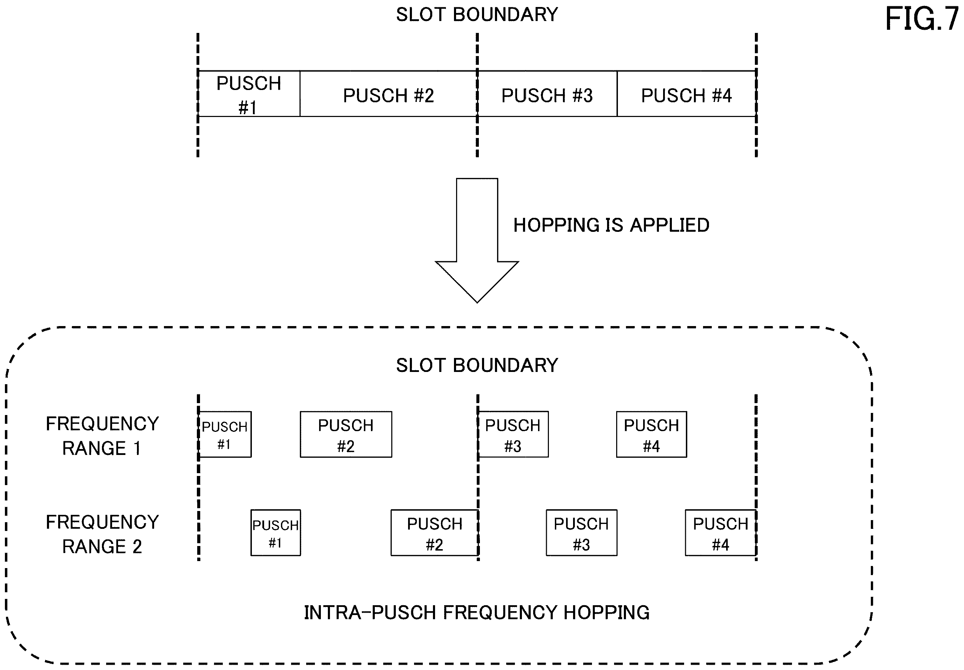

FIG. 7 is a diagram that illustrates an example (4) of frequency hopping according to an embodiment of the present invention. FIG. 7 shows an example of intra-PUSCH frequency hopping. As shown in FIG. 7, hops are configured alternately, in units of half-PUSCHs, between frequency ranges.

Option 2-2) A new RRC parameter such as, for example, "Multi-Pusch-FrequencyHopping" may be additionally configured to signal the frequency hopping method to apply to multi-PUSCH scheduling. Note that existing frequency hopping parameters (for example, "FrequencyHopping," "frequencyHoppingDCI-01," "frequencyHoppingDCI-0-2," etc.) may be configured to signal the frequency hopping method to apply to single-PUSCH scheduling.

Option 2-2-1) Existing frequency hopping methods may be applied to multi-PUSCH scheduling. Inter-slot frequency hopping and intra-slot frequency hopping may be configurable by "Multi-Pusch-FrequencyHopping."

Option 2-2-2) Enhanced frequency hopping methods may be applied to multi-PUSCH scheduling. Inter-PUSCH frequency hopping and/or intra-PUSCH frequency hopping may be applied to multi-PUSCH scheduling. None, either, or both of inter-slot frequency hopping and intra-slot frequency hopping may be supported in multi-PUSCH scheduling. "Multi-Pusch-FrequencyHopping" may configure inter-PUSCH frequency hopping, intra-PUSCH frequency hopping, inter-slot frequency hopping, and/or intra-slot frequency hopping.

In option 2 above, in the event multi-PUSCH scheduling supports frequency hopping, the frequency hopping method that may be supported may employ the following RB allocations.

In the event inter-slot frequency hopping is applied to multiple PUSCHs in multiple slots, the allocation of RBs in each hop may be the same as in inter-slot frequency hopping in release 16.

In the event intra-slot frequency hopping is applied to multiple PUSCHs in multiple slots, the allocation of RBs in each hop may be the same as in intra-slot frequency hopping in release 16. However, this excludes the case in which multiple PUSCHs are scheduled by a DCI and allocated discontinuously in one slot. When multiple PUSCHs are allocated discontinuously in one slot, the interval that is subject to frequency hopping is from the starting symbol of the first PUSCH to the last symbol of the last PUSCH.

When inter-PUSCH frequency hopping is applied to multi-PUSCH scheduling, the starting RB of the n-th PUSCH is given by an equation 1 below:

[Equation 1]

$$RB_{start}(n) = \begin{cases} RB_{start} & n \bmod 2 = 0 \\ (RB_{start} + RB_{offset}) \bmod N_{BWP}^{size} & n \bmod 2 = 1 \end{cases}$$

As shown in equation 1, even-numbered PUSCHs hop without an offset, and odd-numbered PUSCHs hop with an offset.

When intra-PUSCH frequency hopping is applied to multiple PUSCHs in multiple slots, the starting RBs of the first hop and the second hop are given by following equation 2:

[Equation 2]

$$RB_{start}(n) = \begin{cases} RB_{start} & i = 0 \\ (RB_{start} + RB_{offset}) \bmod N_{BWP}^{size} & i = 1 \end{cases}$$

As shown in equation 2, the first hop has no offset and the second hop has an offset. The number of symbols in the first hop is given by following equation 3, and the number of symbols in the second hop is given by following equation 4:

[Equation 3]

$$\left\lfloor N_{symb}^{PUSCH,S}/2 \right\rfloor$$

[Equation 4]

$$N_{symb}^{PUSCH,S} - \left\lfloor N_{symb}^{PUSCH,S}/2 \right\rfloor$$

Note that $N_{symb}^{PUSCH,S}$ in equations 3 and 4 is the length of PUSCH.

Which option in the above-described embodiment is used may be configured by a higher layer parameter, may be reported as a UE capability from the terminal 20, may be defined in the technical specifications, or may be determined based on a higher layer parameter and a UE capability.

Note that a UE capability to indicate whether or not to support frequency hopping for multi-PUSCH scheduling may be defined. Note that a UE capability to indicate whether or not to support enhanced frequency hopping methods for multi-PUSCH scheduling may be defined. A UE capability to indicate whether or not to support a new RRC parameter for signaling the frequency hopping mode for multi-PUSCH scheduling may be defined.

According to the above embodiment, the terminal 20 can employ frequency hopping, in a highly flexible manner, when multiple PUSCHs are scheduled.

That is, frequency hopping can be employed when multiple channels are scheduled in a wireless communication system.

(Device structure)

Next, example functional structures of the base station 10 and the terminal 20 that execute the foregoing processes and operations will be described. The base station 10 and the terminal 20 include functional parts that implement the embodiment described above. However, each of the base station 10 and the terminal 20 may have only part of the functions of the embodiment.

<Base station 10>

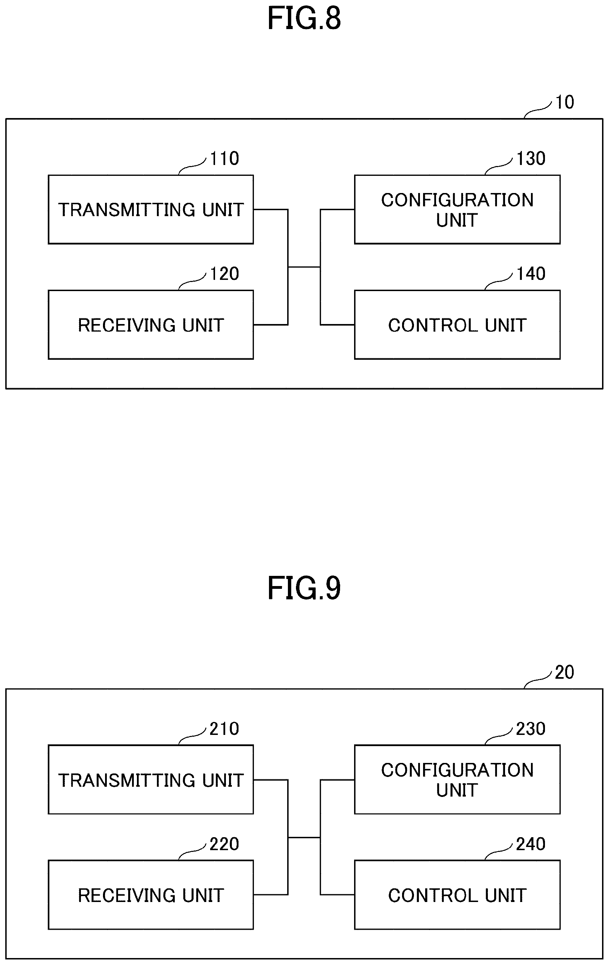

FIG. 8 is a diagram that illustrates an example functional structure of the base station 10 according to an embodiment of the present invention. Referring to FIG. 8, the base station 10 has a transmitting unit 110, a receiving unit 120, a configuration unit 130, and a control unit 140. The functional structure shown in FIG. 8 is only an example. A functional category and the name of the functional unit may be any category or name insofar as the functional unit can perform the operations according to the embodiment of the present invention.

The transmitting unit 110 includes a function for generating signals to be transmitted to the terminal 20 side and transmitting the signals wirelessly. Also, the transmitting unit 110 transmits inter-network-node messages to other network nodes. The receiving unit 120 includes a function for receiving various signals transmitted from the terminal 20, and obtaining, for example, higher layer information from the received signals. Also, the transmitting unit 110 has a function for transmitting NR-PSS, NR-SSS, NR-PBCH, DL/UL control signals and so forth, to the terminal 20. Also, the receiving unit 120 receives inter-network-node messages from other network nodes.

The configuration unit 130 stores pre-configured configuration information and various configuration information to be transmitted to the terminal 20. The content of the configuration information is, for example, information related to measurement configurations.

The control unit 140 controls the measurement configurations as described in the embodiment. Also, the control unit 140 performs scheduling. The functional unit related to signal transmission in the control unit 140 may be included in the transmitting unit 110, and the functional unit related to signal reception in the control unit 140 may be included in the receiving unit 120.

<Terminal 20>

FIG. 9 is a diagram that illustrates an example functional structure of the terminal 20 according to an embodiment of the present invention. As shown in FIG. 9, the terminal 20 has a transmitting unit 210, a receiving unit 220, a configuration unit 230, and a control unit 240. The functional structure shown in FIG. 9 is simply an example. A functional category and the name of the functional unit may be any category or name insofar as the functional unit can perform the operations according to an embodiment of the present invention.

The transmitting unit 210 includes a function for generating signals to be transmitted from transmission data, and transmitting the signals wirelessly. The receiving unit 220 includes a function for receiving various signals wirelessly and obtaining, for example, higher layer information from the received physical layer signals. Also, the receiving unit 220 has a function for receiving NR-PSS, NR-SSS, NR-PBCH, DL/UL/SL control signals, and so forth, transmitted from the base station 10. Also, for example, in D2D communication, the transmitting unit 210 transmits a physical sidelink control channel(PSCCH), a physical sidelink shared channel (PSSCH), a physical sidelink discovery channel (PSDCH), a physical sidelink broadcast channel (PSBCH) and so forth, to other terminals 20, and the receiving unit 220 receives PSCCH, PSSCH, PSDCH or PSBCH and so forth, from other terminals 20.

The configuration unit 230 stores various configuration information received from the base station 10 by the receiving unit 220. Also, the configuration unit 230 also stores configuration information that is configured in advance. The content of the configuration information is, for example, information related to measurement configurations.

The control unit 240 controls the configurations related to frequency hopping, as described in the embodiment. The functional unit related to signal transmission in the control unit 240 may be included in the transmitting unit 210, and the functional unit related to signal reception in the control unit 240 may be included in the receiving unit 220.

(Hardware structure)

The block diagrams (FIG. 8 and FIG. 9) used in the description of the above embodiment illustrate blocks of functional units. These functional blocks (components) are implemented by any combination of hardware and/or software. In addition, the method of implementing each functional block is not particularly limited. That is, each functional block may be implemented by using a single device that is physically or logically combined, or two or more devices that are physically or logically separated may be directly or indirectly connected (for example, by using a cable, radio, etc.), and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, expectation, deeming, broadcasting, notifying, communicating, forwarding, configuring, reconfiguring, allocating, mapping, and assigning. For example, a functional block (component) that works a transmission function is referred to as a "transmitting unit" or a "transmitter." In either case, as described above, the method of implementation is not particularly limited.

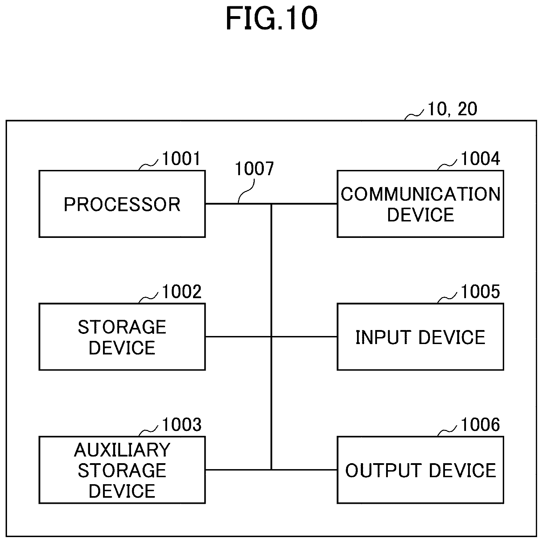

For example, the base station 10, the terminal 20, and so forth according to the embodiment of the present disclosure may function as a computer for processing the wireless communication method of the present disclosure. FIG. 10 is a diagram that illustrates an example hardware structure of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as circuit, apparatus, unit, and so forth. The hardware structure of the base station 10 and the terminal 20 may be configured to include one or more of the devices illustrated in the drawings, or may be configured without some of the devices.

The functions of the base station 10 and the terminal 20 are realized by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be composed of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processes in accordance with the above. As for the programs, programs that cause the computer to execute at least part of the operation described in the above embodiment may be used. For example, the control unit 140 of the base station 10 illustrated in FIG. 8 may be stored in the storage device 1002 and implemented by control programs operating in the processor 1001. For example, the control unit 240 of the terminal 20 illustrated in FIG. 9 may be stored in the storage device 1002 and implemented by control programs operating in the processor 1001. Although the foregoing processes have been described and executed by one processor 1001, they may be executed simultaneously or sequentially by two or more processors 1001. The processor 1001 may be implemented by one or more chips. The programs may be transmitted from the network via a telecommunication line.

The storage device 1002 is a computer-readable recording medium and may be composed of at least one of, for example, a read-only memory (ROM), an erasable programmable ROM (EPROM), an electrically erasable programmable ROM (EEPROM), a random access memory (RAM), and the like. The storage device 1002 may be referred to as a register, cache, main memory (main storage device), or the like. The storage device 1002 can store programs (program codes), software modules, and so forth, executable to implement the communication method according to the embodiment of the present disclosure.

The auxiliary storage device 1003 is a computer-readable recording medium and may be composed of at least one of an optical disk, such as a compact disc ROM (CD-ROM), a hard disk drive, a flexible disk, a magneto-optical disk (for example, a compact disc, a digital versatile disc, a Blu-ray disc (registered trademark), etc.), a smart card, a flash memory (for example, a card, a stick, a key drive), a floppy disk (registered trademark), a magnetic strip, and the like. The storage medium described above may be, for example, a database, a server, or other suitable medium that includes at least one of a storage device 1002 and an auxiliary storage device 1003.

The communication device 1004 is hardware (a transceiving device) for performing communication between computers via at least one of a wired network and a wireless network, and is also referred to as a "network device," a "network controller," a "network" card, a "communication module," or the like. The communication device 1004 may be composed of a high frequency switch, a duplexer, a filter, a frequency synthesizer, or the like, for example, to implement at least one of frequency division duplex (FDD) and time division duplex (TDD). For example, the transmitting/receiving antenna, the amplifier unit, the transceiving unit, the transmission line interface, and the like may be implemented by the communication device 1004. The transceiving unit may be physically or logically isolated, respective implementations of a transmitting unit and a receiving unit.

The input device 1005 is an input device (for example, a keyboard, a mouse, a microphone, a switch, a button, a sensor, etc.) that accepts external input. The output device 1006 is an output device (for example, a display, a speaker, an LED lamp, etc.) that implements external output. The input device 1005 and the output device 1006 may have an integral structure (for example, a touch panel).

Each device, such as the processor 1001 and the storage device 1002, is connected by a bus 1007 for communicating information. The bus 1007 may be constructed using a single bus or may be constructed using different buses between devices.

The base station 10 and the terminal 20 may also include hardware such as a microprocessor, a digital signal processor (DSP), an application-specific integrated circuit (ASIC), a programmable logic device (PLD), a field programmable gate array (FPGA), and so forth, and some or all of the functional blocks may be implemented by the hardware. For example, the processor 1001 may be implemented using at least one of these hardware components.

(Summary of embodiment)

As described above, according to an embodiment of the present invention, a terminal is provided. This terminal may have: a receiving unit configured to receive DCI (Downlink Control Information) that schedules a plurality of PUSCHs (Physical Uplink Shared CHannels), and a parameter related to frequency hopping, from a base station; and a transmitting unit configured to apply, based on the parameter, frequency hopping to the plurality of PUSCHs, and transmit the plurality of PUSCHs to the base station.

The above structure allows the terminal 20 to employ frequency hopping, in a highly flexible manner, when multiple PUSCHs are scheduled. That is, frequency hopping can be employed when multiple channels are scheduled in a wireless communication system.

The transmitting unit may apply, based on the parameter, inter-PUSCH frequency hopping, in which each of the plurality of PUSCHs serves as a unit of hopping. This structure allows the terminal 20 to employ frequency hopping, in a highly flexible manner, when multiple PUSCHs are scheduled.

the transmitting unit may apply, based on the parameter, intra-PUSCH frequency hopping, in which a first hop spans an integer part of half a symbol duration of each PUSCH, and in which a second hop spans a number of symbols that is determined by subtracting a number of symbols included in the first hop, from a number of symbols in the PUSCH. This structure allows the terminal 20 to employ frequency hopping, in a highly flexible manner, when multiple PUSCHs are scheduled.

The transmitting unit may apply, based on the parameter, intra-slot frequency hopping, in which one hop spans the plurality of PUSCHs. This structure allows the terminal 20 to employ frequency hopping, in a highly flexible manner, when multiple PUSCHs are scheduled.

The transmitting unit may apply, based on the parameter, intra-slot frequency hopping, in which, when the plurality of PUSCHs are allocated discontinuously in one slot, an interval that is subject to frequency hopping is from a starting symbol of a first PUSCH to a last symbol of a last PUSCH. This structure allows the terminal 20 to employ frequency hopping, in a highly flexible manner, when multiple PUSCHs are scheduled.

Also, according to an embodiment of the present invention, a communication method to be performed by a terminal is provided. This communication method may include: receiving DCI (Downlink Control Information) that schedules a plurality of PUSCHs (Physical Uplink Shared CHannels), and a parameter related to frequency hopping, from a base station; and applying, based on the parameter, frequency hopping to the plurality of PUSCHs, and transmitting the plurality of PUSCHs to the base station.

This structure allows the terminal 20 to employ frequency hopping, in a highly flexible manner, when multiple PUSCHs are scheduled. That is, frequency hopping can be employed when multiple channels are scheduled in a wireless communication system.

(Notes on embodiment)

An example embodiment of the present invention has been described above, but the disclosed invention is not limited to the above embodiment, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiment, the order of the processes may be changed as long as there is no contradiction. For the sake of convenience of processing description, the base station 10 and the terminal 20 are described using functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, an hard disk drive (HDD), a removable disk, a CD-ROM, a database, a server, or any other appropriate storage medium.

Furthermore, notification of information is not limited to the aspect or embodiment described in the present disclosure, and may be provided by using any other method. For example, the notification of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB), etc.), other signals, or a combination thereof. Furthermore, RRC signaling may be referred to as an "RRC message" and may be, for example, an RRC connection setup message, an RRC connection reconfiguration message, or the like.

Each aspect and embodiment described in the present disclosure may be applied to at least one of long-term evolution (LTE), LTE-advanced (LTE-A), SUPER 3G, IMT-Advanced, 4th generation mobile communication system (4G), 5th generation mobile communication system (5G), future radio access (FRA), new radio (NR), W-CDMA (registered trademark), GSM (registered trademark), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and next generation systems enhanced based on these standards. Furthermore, a plurality of systems (for example, a combination of at least one of LTE and LTE-A with 5G) may be combined to be applied.

The order of the processing procedures, the order of the sequences, the order of the flowcharts, and the like of the respective aspects/embodiments described in this specification may be changed, provided that there is no contradiction. For example, the method described in the present disclosure presents elements of various steps with an example order and is not limited to the presented, specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case has been shown above in which there is one network node other than the base station 10. The one network node may be a combination of a plurality of other network nodes (for example, MME and S-GW).

Information, a signal, or the like described in the present disclosure may be output from a higher layer (or from a lower layer) to a lower layer (or to a higher layer). Information, a signal, or the like described in the present disclosure may be input and output via a plurality of network nodes.

Input and output information and the like may be stored in a specific place (for example, a memory), or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called "software," "firmware," "middleware," a "microcode," a "hardware description language," or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of these wired technology and radio technology is included in a definition of a transmission medium.

Information, signals, and the like described in the present disclosure may be expressed using any one of a variety of different techniques. For example, data, instructions, commands, information, signals, bits, symbols, chips, and the like, which are mentioned throughout the above description, may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC) may be referred to as a "carrier frequency," a "cell," a "frequency carrier," or the like.

The terms "system" and "network" used in the present disclosure are interchangeable.

Furthermore, the information, parameters, and the like described in the present disclosure may be expressed by using absolute values, may be expressed by using relative values from predetermined values, or may be expressed by using any other corresponding information. For example, the radio resources may be those indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term such as a "macrocell," a "small cell," a "femtocell," and a "picocell."

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client," or some other suitable terms.

At least one of the base station and the mobile station may be also referred to as a "transmission device," a "receiving device," a "communication device," or the like. At least one of the base station and the mobile station may be a device installed in a mobile body, a mobile body itself, or the like. The mobile body may be a vehicle (for example, a car, an airplane, etc.), an unmanned body that moves (for example, a drone, an autonomous car or the like), or a robot (manned type or unmanned type). At least one of the base station and the mobile station includes a device that need not move during communication operation. For example, at least one of the base station and the mobile station may be an Internet of Things (IoT) device such as a sensor.

Furthermore, the base station in the present disclosure may be replaced by the user terminal. For example, various aspects/embodiments of the present disclosure may be applied to a configuration in which communication between the base station and the user terminal is replaced by communication between multiple terminals 20 (such communication may be referred to as "device-to-device (D2D)," "vehicle-to-everything (V2X)," etc.). In this case, the terminals 20 may have and perform the functions the base station 10 described above has. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," "searching," "inquiring," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

The terms "connected," "coupled," or variations thereof may mean any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency region, a microwave region, or a light (both visible and non-visible) region as non-limiting and non-exhaustive examples.

A reference signal may be abbreviated as "RS" and may be referred to as a "pilot," depending on the standard that is applied.

The phrase "based on" used in the present disclosure does not only mean "based only on," unless otherwise stated. In other words, the phrase "based on" means both "based only on" and "based at least on."

Any reference to an element using a designation such as "first" or "second," used in the present disclosure, does not generally restrict quantities or the order of those elements. Such designation can be used in the present disclosure as a convenient method of distinguishing between two or more elements. Thus, reference to the first and second elements does not mean that only two elements can be adopted there, or the first element must precede the second element in a certain way.

Furthermore, "means" in the structure of each of the above devices may be replaced with "unit," "circuit," "device," or the like.

When "include," "including," and variations thereof are used in the present disclosure, these terms are intended to be comprehensive, similar to the term "provided with (comprising)." Furthermore, the term "or" used in the present disclosure is intended not to be an exclusive OR.

A radio frame may include one or more frames in the time domain. In the time domain, each of one or more frames may be referred to as a "subframe." The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame structure, a specific filtering process performed in the frequency domain by a transceiver, a specific windowing process performed in the time domain by a transceiver, and the like.

A slot may include one or more symbols (orthogonal frequency division multiplexing (OFDM) symbols, single carrier frequency division multiple access (SC-FDMA) symbols, etc.) in the time domain. A slot may be a time unit based on numerology.

A slot may include a plurality of mini slots. Each mini slot may include one or more symbols in the time domain. Furthermore, a mini slot may be referred to as a "sub-slot." A mini slot may include fewer symbols than a slot. PDSCH (or PUSCH) that is transmitted in a unit of time greater than a mini slot may be referred to as "PDSCH (or PUSCH) mapping type A." PDSCH (or PUSCH) that is transmitted using a mini slot may be referred to as "PDSCH (or PUSCH) mapping type B."

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a "transmission time interval (TTI)," or a plurality of consecutive subframes may be referred to as a "TTI," or one slot or one mini slot may be referred to as a "TTI." In other words, at least one of the subframe and the TTI may be a subframe (1 ms) in conventional LTE, may be a period shorter than 1 ms (for example, 1 to 13 symbols), or may be a period longer than 1 ms. A unit representing the TTI may be referred to as a "slot," a "mini slot," or the like, instead of a "subframe."

Here, for example, the TTI refers to a minimum time unit of scheduling in wireless communication. For example, in an LTE system, the base station performs scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot is referred to as a "TTI," one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a "common TTI" (TTI in LTE Rel. 8 to 12), a "normal TTI," a "long TTI," a "common subframe," a "normal subframe," a "long subframe," a "slot," or the like. A TTI shorter than a common TTI may be referred to as a "reduced TTI," a "short TTI," a "partial TTI" (a partial or fractional TTI), a "reduced subframe," a "short subframe," a "mini slot," a "sub slot," a "slot," or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

Furthermore, the time range of an RB may include one or more symbols and may have a length of one slot, one mini slot, one subframe, or one TTI. One TTI, one subframe, or the like may be formed with one or more resource blocks.

Furthermore, one or more RBs may be referred to as a "physical resource block (PRB)," a "subcarrier group (SCG)," a "resource element group (REG)," a "PRB pair," an "RB pair," or the like.

Furthermore, a resource block may be formed with one or more resource elements (REs). For example, one RE may be a radio resource field of one subcarrier and one symbol.

A bandwidth part (BWP) (which may be referred to as a "partial bandwidth" or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include BWP for UL (UL BWP) and BWP for DL (DL BWP). In a UE, one or more BWPs may be configured in one carrier.

At least one of configured BWPs may be active, and the UE need not assume that predetermined signals/channels are transmitted and received outside an active BWP. Furthermore, a "cell," a "carrier," or the like in the present disclosure may be replaced with a "BWP."

Structures of the radio frame, the subframe, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, "A and B are different" may mean "A and B are different from each other." However, this may also mean "A and B are different from C." Terms such as "separated" or "combined" may be interpreted as well as "different."

Each aspect/embodiment described in the present disclosure may be used alone, in combination, or may be switched in accordance with the implementation. Furthermore, notification of predetermined information (for example, notification of "being X") is not limited to notification performed explicitly, but may be performed implicitly (for example, not notifying the predetermined information).

Note that "Multi-PUSCH-And-Single-PUSCH-Repetition" in the present disclosure is an example of a higher layer parameter. "pusch-AggregationFactor" is another example of a higher layer parameter.

Although the present disclosure has been described above in detail, it is obvious to those skilled in the art that the present disclosure is not limited to the embodiment described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

[DESCRIPTION OF THE REFERENCE NUMERALS]

| 10 | base station |
| 110 | transmitting unit |
| 120 | receiving unit |
| 130 | configuration unit |
| 140 | control unit |
| 20 | terminal |
| 210 | transmitting unit |
| 220 | receiving unit |
| 230 | configuration unit |
| 240 | control unit |
| 1001 | processor |
| 1002 | storage device |
| 1003 | auxiliary storage device |
| 1004 | communication device |
| 1005 | input device |
| 1006 | output device |

**Claims**

1. A terminal comprising:

   a receiving unit configured to receive DCI (Downlink Control Information) that schedules a plurality of PUSCHs (Physical Uplink Shared CHannels), and a parameter related to frequency hopping, from a base station; and
   a transmitting unit configured to apply, based on the parameter, frequency hopping to the plurality of PUSCHs, and transmit the plurality of PUSCHs to the base station.

2. The terminal according to claim 1, wherein the transmitting unit applies, based on the parameter, inter-PUSCH frequency hopping, in which each of the plurality of PUSCHs serves as a unit of hopping.

3. The terminal according to claim 1, wherein the transmitting unit applies, based on the parameter, intra-PUSCH frequency hopping, in which a first hop spans an integer part of half a symbol duration of each PUSCH, and in which a second hop spans a number of symbols that is determined by subtracting a number of symbols included in the first hop, from a number of symbols in the PUSCH.

4. The terminal according to claim 1, wherein the transmitting unit applies, based on the parameter, intra-slot frequency hopping, in which one hop spans the plurality of PUSCHs.

5. The terminal according to claim 1, wherein the transmitting unit applies, based on the parameter, intra-slot frequency hopping, in which, when the plurality of PUSCHs are allocated discontinuously in one slot, an interval that is subject to frequency hopping is from a starting symbol of a first PUSCH to a last symbol of a last PUSCH.

6. A communication method to be performed by a terminal, the method comprising:

   receiving DCI (Downlink Control Information) that schedules a plurality of PUSCHs (Physical Uplink Shared CHannels), and a parameter related to frequency hopping, from a base station; and
applying, based on the parameter, frequency hopping to the plurality of PUSCHs, and transmitting the plurality of PUSCHs to the base station.

# FIG.1

EP 4 319 376 A1

# FIG.2

FR1
{15, 30, 60} kHz SCS
5〜100 MHz BW

FR2
{60, 120, (240)}
kHz SCS
50〜400 MHz BW

52.6 GHz−71 GHz(FR2x)

FREQUENCY

0.41
GHz

1 GHz

7.125
GHz

10 GHz

24.25
GHz

52.6
GHz

71
GHz

100
GHz

EP 4 319 376 A1

# FIG.3

START

S1

MULTIPLE PUSCHS ARE SCHEDULED BY DCI

S2

FREQUENCY HOPPING IS APPLIED TO MULTIPLE PUSCHS AND MULTIPLE PUSCHS TO WHICH FREQUENCY HOPPING IS APPLIED ARE TRANSMITTED

END

SLOT BOUNDARY

FIG.4

| PUSCH #1 | PUSCH #2 | PUSCH #3 | PUSCH #4 |

HOPPING IS APPLIED

SLOT BOUNDARY

FREQUENCY RANGE 1

| PUSCH #1 | PUSCH #2 |

FREQUENCY RANGE 2

| PUSCH #3 | PUSCH #4 |

INTER-SLOT FREQUENCY HOPPING

EP 4 319 376 A1

SLOT BOUNDARY

# FIG.5

| PUSCH #1 | PUSCH #2 | PUSCH #3 | PUSCH #4 |

HOPPING IS APPLIED

SLOT BOUNDARY

FREQUENCY RANGE 1

| PUSCH #1 | PUSCH #2 | | PUSCH #3 |

FREQUENCY RANGE 2

| | PUSCH #2 | | PUSCH #4 |

INTRA-SLOT FREQUENCY HOPPING

EP 4 319 376 A1

EP 4 319 376 A1

# FIG.6

SLOT BOUNDARY

| PUSCH #1 | PUSCH #2 | PUSCH #3 | PUSCH #4 |

HOPPING IS APPLIED

SLOT BOUNDARY

FREQUENCY RANGE 1    PUSCH #1        PUSCH #3

FREQUENCY RANGE 2        PUSCH #2        PUSCH #4

INTER-PUSCH FREQUENCY HOPPING

# FIG.7

SLOT BOUNDARY

| PUSCH #1 | PUSCH #2 | PUSCH #3 | PUSCH #4 |

HOPPING IS APPLIED

SLOT BOUNDARY

FREQUENCY RANGE 1

| PUSCH #1 | | PUSCH #2 | | PUSCH #3 | | PUSCH #4 |

FREQUENCY RANGE 2

| PUSCH #1 | | PUSCH #2 | | PUSCH #3 | | PUSCH #4 |

INTRA-PUSCH FREQUENCY HOPPING

EP 4 319 376 A1

# FIG.8

```
                                    ┌─ 10
┌─────────────────────────────────────────────────────┐
│   ┌─ 110                      ┌─ 130                  │
│  ┌─────────────────┐        ┌─────────────────┐      │
│  │TRANSMITTING UNIT│────┐ ┌─│ CONFIGURATION   │      │
│  └─────────────────┘    │ │ │     UNIT        │      │
│                         │ │ └─────────────────┘      │
│   ┌─ 120               │ │  ┌─ 140                  │
│  ┌─────────────────┐    │ │ ┌─────────────────┐      │
│  │ RECEIVING UNIT  │────┘ └─│  CONTROL UNIT   │      │
│  └─────────────────┘        └─────────────────┘      │
└─────────────────────────────────────────────────────┘
```

# FIG.9

```
                                      ┌─ 20
┌─────────────────────────────────────────────────────┐
│   ┌─ 210                      ┌─ 230                  │
│  ┌─────────────────┐        ┌─────────────────┐      │
│  │TRANSMITTING UNIT│────┐ ┌─│ CONFIGURATION   │      │
│  └─────────────────┘    │ │ │     UNIT        │      │
│                         │ │ └─────────────────┘      │
│   ┌─ 220               │ │  ┌─ 240                  │
│  ┌─────────────────┐    │ │ ┌─────────────────┐      │
│  │ RECEIVING UNIT  │────┘ └─│  CONTROL UNIT   │      │
│  └─────────────────┘        └─────────────────┘      │
└─────────────────────────────────────────────────────┘
```

# FIG.10

~10, 20

~1001

PROCESSOR

1007

~1004

COMMUNICATION DEVICE

~1002

STORAGE DEVICE

~1005

INPUT DEVICE

~1003

AUXILIARY STORAGE DEVICE

~1006

OUTPUT DEVICE

## INTERNATIONAL SEARCH REPORT

| International application No. |
| --- |
| **PCT/JP2021/013425** |

**A. CLASSIFICATION OF SUBJECT MATTER**

*H04W 72/04*(2009.01)i
FI: H04W72/04 132

According to International Patent Classification (IPC) or to both national classification and IPC

**B. FIELDS SEARCHED**

Minimum documentation searched (classification system followed by classification symbols)

H04W72/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2019/097659 A1 (NTT DOCOMO, INC.) 23 May 2019 (2019-05-23) claims 1-6, paragraphs [0102]-[0124] | 1, 4, 6 |
| Y | | 2, 3 |
| A | | 5 |
| Y | JP 2020-182115 A (SHARP CORP.) 05 November 2020 (2020-11-05) paragraphs [0207]-[0236], fig. 24-25 | 2, 3 |
| Y | US 2021/0092762 A1 (WILUS INSTITUTE OF STANDARDS AND TECHNOLOGY INC.) 25 March 2021 (2021-03-25) paragraph [0100] | 3 |
| A | US 2021/0051636 A1 (QUALCOMM INCORPORATED) 18 February 2021 (2021-02-18) entire text, all drawings | 1-6 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 September 2021** | **12 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/013425**

| Patent document cited in search report | | | Publication date (day/month/year) | Patent family member(s) | | | Publication date (day/month/year) |
|---|---|---|---|---|---|---|---|
| WO | 2019/097659 | A1 | 23 May 2019 | US 2020/0389204 A1 claims 7-11, paragraphs [0133]-[0161] CA 3082736 A | | | |
| JP | 2020-182115 | A | 05 November 2020 | WO 2020/218529 A1 paragraphs [0207]-[0236], fig. 24-25 | | | |
| US | 2021/0092762 | A1 | 25 March 2021 | WO 2019/160387 A1 paragraph [0113] | | | |
| US | 2021/0051636 | A1 | 18 February 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V16.4.0,* December 2020

- *3GPP TS 38.306 V16.3.0,* December 2020